Europäisches Patentamt

European Patent Office

Office européen des brevets

(19)

(11) Veröffentlichungsnummer: **0 167 077**
**B1**

(12) **EUROPÄISCHE PATENTSCHRIFT**

(45) Veröffentlichungstag der Patentschrift: **22.11.90**

(21) Anmeldenummer: **85107772.7**

(22) Anmeldetag: **22.06.85**

(51) Int. Cl.⁵: **B 62 D 49/06,** B 62 D 55/02

(54) Schubaggregat.

(30) Priorität: **05.07.84 CH 3243/84**

(43) Veröffentlichungstag der Anmeldung:
**08.01.86 Patentblatt 86/02**

(45) Bekanntmachung des Hinweises auf die
Patenterteilung:
**22.11.90 Patentblatt 90/47**

(84) Benannte Vertragsstaaten:
**AT BE DE FR GB IT NL SE**

(56) Entgegenhaltungen:
**CH-A- 108 013
DE-A-2 313 161
US-A-2 714 933
US-A-3 526 290
US-A-3 791 052
US-A-4 340 127**

(73) Patentinhaber: **Baltensperger, Eduard
Eichstrasse 176
CH-8311 Brütten (CH)**

(72) Erfinder: **Baltensperger, Eduard
Eichstrasse 176
CH-8311 Brütten (CH)**

(74) Vertreter: **EGLI-EUROPEAN PATENT
ATTORNEYS
Horneggstrasse 4
CH-8008 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Schubaggregat nach dem Oberbegriff des Patentanspruches 1.

Die fortschreitende Mechanisierung der Landwirtschaft und die immer grösser werdenden Ackerflächen, gepaart mit immer grösseren und leistungsfähigeren Erntemaschinen - ja ganzen Geräteketten, welche zusammengekoppelt über das Feld gezogen werden müssen, auch in Steigungen -, verlangen immer höhere Zugleistungen vom Zugfahrzeug, dem Ackerschlepper. Auch bei der Bodenbearbeitung, wo man vermehrt auf tiefere Bodenlockerung gehen will und man gleichzeitig noch Geräte von grösserer Arbeitsbreite verwenden möchte, muss ein moderner Schlepper mehr als das Doppelte an Zugleistung gegenüber früher aufbringen. Man hat diesen Umstand in der Weise Rechnung getragen, dass man immer schwerere, grössere und längere Schlepper gebaut hat. Mit etwas breiterer und höherer Bereifung und zum Teil mit Hilfe von zu- und abschaltbarem 4-Radantrieb wollte man diese Ansprüche erfüllen.

Die Praxis zeigt aber eindeutig, dass eben Aekker keine harten und stabilen Strassen sind, wo man problemlos mit schweren Fahrzeugen schwere Lasten ziehen kann. Feuchter Ackerboden wird durch hohe spezifische Bodendrücke viel zuviel verdichtet, und durch den durch die hohe Zugleistung zwangsläufig entstehenden hohen "Schlupf" der Antriebsräder wird der schon zusammengepresste Boden noch zerknetet, was erfahrungsgemäss sehr schädlich ist. Die bekannten Folgen: schwere Schädigung der Bodenstruktur.

Der Wasserhaushalt im Boden wird gestört, ebenso die Tätigkeit der Bodenlebewesen und der Bodenbakterien. Die Folgen hiervon sind Mindererträge, kränkelnde Pflanzen, welche von Schädlingen und Pilzkrankheiten geplagt werden und mit umweltschädigenden chemischen Stoffen behandelt werden müssen. Dies führt zu Umweltvergiftung, Ueberdüngung der Gewässer und Seen. Pflanzen, die Phosphate und Nitrate usw. enthalten, die den Verbrauchern, Mensch und Tier, schaden.

Man hat daher schwere Traktoren mit Raupenketten versehen, um so die Bodenpressung zu verringern und gleichzeitig die Zugkraft zu erhöhen. Für leichte Arbeiten ist ein solcher Traktor unwirtschaftlich.

Das Schweizer Patent Nr. 190 576 schlägt vor, die Räder eines Fahrzeuges abnehmbar zu machen und durch Schwingarme mit Raupenbändern zu ersetzen. Bei einem leichten Traktor von 1700 kg Gesamtgewicht wird dadurch die spezifische Bodenpressung zwar verringert, dessen Zugkraft wird jedoch nur wenig vergrössert, da sein Gewicht zu gering ist.

Aus US-A-2,714,933 ist ein Räderfahrzeug bekannt, bei welchem unter seiner Hinterachse ein Raupenfahrwerk angeordnet ist, das einen zusätzlichen Schub für das Räderfahrzeug aufbringt. Das Raupenfahrwerk ist zwar an und absenkbar, jedoch sind die hierfür verwendeten Mittel sowie der Antrieb recht aufwendig und erlauben keine schnelle Montage oder Demontage des Raupenfahrwerkes. Aehnlich sind auch die Verhältnisse bei einer Erdbewegungsmaschine gemäss US-A-3,791,052. Zwischen den Fahrzeugrädern sind Schubaggregate in Form von Raupenfahrwerken angeordnet, die zur Erhöhung der Bodenhaftung und damit zur Schubvergrösserung des Räderfahrzeuges auf die Bodenfläche abgesenkt und bei nicht Gebrauch angehoben werden können. Auch hier handelt es sich um eine recht aufwendige Anordnung, die auch bei Nichtgebrauch mit dem Räderfahrzeug mitgeführt werden muss.

Die Erfindung stellt sich zur Aufgabe, ein Schubaggregat der eingangs beschriebenen Art so weit auszugestalten, dass die Zugkraft des Räderfahrzeuges durch Ankuppeln des Schubaggregates erhöht und gleichzeitig die spezifische Bodenpressung des Trägerfahrzeuges gesenkt wird.

Die Erfindung löst diese Aufgabe mit einem Schubaggregat, das die Kennzeichenden Merkmale des Anspruches 1 aufweist.

Ein Traktor mit einem Gewicht von 1700—2000 kg ist das ideale Fahrzeug für die leichten Arbeiten, wie Heuernte, Düngerstreuen usw. Für die schweren Arbeiten kann das erfindungsgemässe raupenähnliche Schubaggregat angekuppelt werden. Dieses Aggregat kann in zwei oder mehreren Ausführungen mit "Gummiraupe" oder "Stahlraupe" gefertigt resp. verwendet werden. Dieses Aggregat kann ein Eigengewicht von 500 kg bis 2000 kg haben. Es können am Aggregat selbst noch Zusatzgewichte angebracht werden. Mit diesem Zusatzaggregat steigt nun das Schleppergewicht auf 2400 kg bis 4000 kg, welches notwendig ist, um die erwähnten schweren Zugarbeiten auszuführen. Der grosse Vorteil liegt aber darin, dass der Schlepper mit Schubaggregat eine sehr grosse Bodenauflagefläche bekommt. Dank dieser grossen Auflagefläche = Adhäsionsfläche kann der spezifische Bodendruck stark gesenkt werden. Der Druck dürfte auf ca. 200 bis 300 g pro cm/2 absinken, was speziell bei der Bodenbearbeitung, aber auch bei anderen Arbeiten einen unschätzbaren Vorteil bedeutet. Der Schlepper mit Schubaggregat hinterlässt auch im aufgelockerten Acker fast keine Spuren mehr. Dank der grossen Auflagefläche, an welcher sich der Schlepper beim Ziehen abstösst, entsteht praktisch kein "Schlupf". Schlupf bedeutet "Bodenzerknetung", ist aber auch Kraftverlust und hat einen erhöhten Kraftstoffverbrauch zur Folge. Dieser kann 40% und mehr betragen. Am Ackerende, zum Wenden oder auf Strassenfahrten kann das Schubaggregat hochgezogen werden. In gewissen Fällen kann das Schubaggregat von hinten zwischen die Traktorräder geschoben und angekoppelt werden. Der Antrieb des Aggregates kann mittels eines im Aggregat integrierten Hydraulikmotors gekoppelt mit einem Untersetzungsgetriebe erfolgen. Es kann vorwärts- und rückwärtsgetrieben werden. Der Antrieb kann aber auch mechanisch über eine (nicht dargestellte) Gelenkwelle, über Winkelgetriebe und Untersetzung oder auf elektrischem Wege erfolgen. Weil beim Traktor die Angriffsstelle der Zugkraft ca. 60 bis 90 cm über dem Boden liegt, entsteht ein Hebelarm, welcher bewirkt, dass die Vorderräder entlastet und die Hinterräder zusätzlich belastet werden; deshalb ist ein Allradantrieb praktisch wertlos. Das neuartige Schubaggregat kann die steigende Gewichtsbelastung aufnehmen, welche sonst auf die Hinterräder fallen würde, und erbringt dank seiner grossen Bodenauflagefläche und dadurch, dass es mit Motorleistung angetrieben ist, mit dem Schlepper zusammen eine enorm hohe Zugleistung ohne Schlupf bei kleinstem Bodendruck.

In der Zeichnung sind einige Ausführungsbeispiele des Erfindungsgegenstandes vereinfacht dargestellt und deren Verwendung erläutert. Es zeigen:

Fig. 1 ein Schubaggregat in perspektivischer Darstellung,

Fig. 2 das Schubaggregat nach Fig. 1, angekuppelt an einen Traktor,

Fig. 3 ein Detail einer Ankupplung mit Zapfen und Hülse,

Fig. 4 ein Detail einer Ankupplung mittels eines Parallelogramm-Gestänges,

Fig. 5 ein Schubaggregat, gekoppelt mit einem Bodenbearbeitungsgerät,

Fig. 6 und 7 eine Ansicht von oben, welche die Teile eines Traktors, ein Schubaggregat und ein Bodenbearbeitungsgerät zeigt,

Fig. 8 zeigt die Grösse der Bodenauflageflächen der Räder und der Raupe,

Fig. 9 ein allradgetriebenes, geländegängiges Fahrzeug mit angestecktem Schubgerät,

Fig. 10 einen Traktor mit Einachsanhänger und angestecktem Schubaggregat.

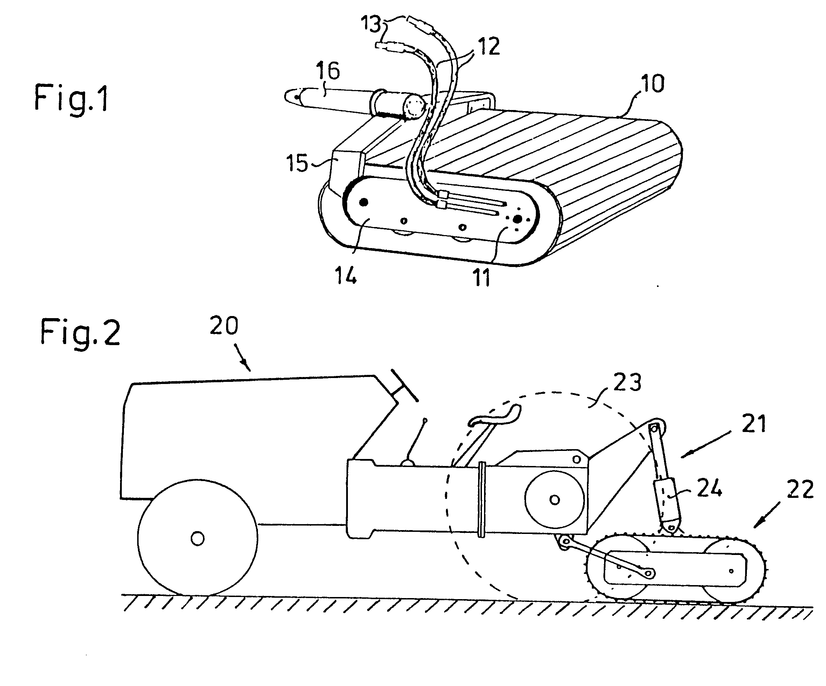

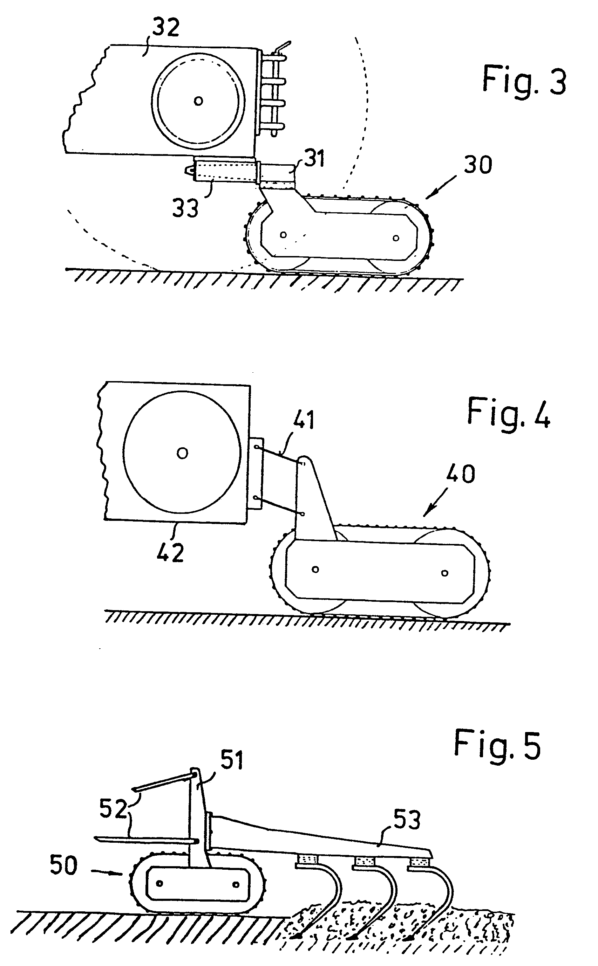

Das in Fig. 1 dargestellte Schubaggregat hat ein Gummiraupenband oder ein Stahlkettenraupenband 10, das sich annähernd über die volle Breite des Aggregates erstreckt. Der Antrieb des Raupenbandes erfolgt durch einen eingebauten Hydraulikmotor 11, der von einer traktoreigenen Hydraulikanlage über die Hydraulikschläuche 12 mit Anschlusskupplungen 13 getrieben wird. Vorne am Rahmen 14 ist ein über das Raupenband geführter Bügel 15 angebracht, der einen horizontal in Fahrtrichtung ausgerichteten Zapfen 16 aufweist. Der Zapfen dient dem Ankuppeln an ein Fahrzeug, um dessen Zugkraft durch den zusätzlichen Schub zu erhöhen. Am Fahrzeug befindet sich eine dem Zapfen entsprechende Hülse, wie dies in Fig. 3 dargestellt ist.

Der Bügel, der Zapfen und die Hülse sind so kräftig bemessen, dass der Traktor mit seinem Hydraulikantrieb das Schubgerät führen und anheben kann, wie dies beim Wenden erforderlich ist.

Statt das Schubaggregat hydraulisch anzutreiben, kann es auch vom Traktor aus mechanisch mittels einer Zapfwelle angetrieben werden. Auch ein elektrischer Antrieb ist möglich. Die Antriebsgeschwindigkeit muss so geregelt werden, dass die Vorschubgeschwindigkeit des Schubgerätes der Fahrtgeschwindigkeit des Traktors oder des Fahrzeuges entspricht, an das es zwecks Erhöhung der Zugkraft angekuppelt ist. Der Antriebsmotor des Schubaggregates sollte sowohl vorwärts- wie rückwärtsgetrieben werden können.

Fig. 2 zeigt einen Traktor 20 mit einem über eine Dreipunktaufhängung 21 angekuppelten Schubaggregat 22. Das Schubaggregat ist so schmal gebaut, dass es zwischen den Hinterrädern 23 des Traktors angebracht werden kann. Eine solche Anordnung ist besonders günstig, da sie dem Schubgerät erlaubt, einen Teil der Last der Antriebsräder 23 zu übernehmen. Die hydraulische Hebevorrichtung 24 erlaubt, das Schubaggregat beim Wenden anzuheben.

Fig. 3 zeigt, wie ein Schubaggregat 30, das mit einem Führungszapfen 31 wie bei Fig. 1 versehen ist, an den Getriebeblock 32 eines Traktors angekuppelt werden kann. Der Getriebeblock ist dazu mit einer Hülse 33 versehen, in die der Zapfen 31 eingeschoben ist. Das Schubaggregat kann um den Zapfen schwenken, was ihm erlaubt, sich an das Gelände anzupassen. Zur Verringerung des spezifischen Bodendruckes des Traktors ist zweckmässig der Zapfen 31 anhebbar ausgebildet.

Ist der Getriebemotorblock nicht anhebbar, kann das Schubaggregat 40 mittels eines parallelogrammgestänges 41 an den Getriebeblock 42 angehängt sein, wie dies Fig. 4 zeigt.

Fig. 5 zeigt ein Schubaggregat 50, das mit einer Brücke 51 versehen ist, an die sowohl die Verbindungselemente 52 einer Dreipunktaufhängung zum (nicht dargestellten) Traktor als auch ein Bodenbearbeitungsgerät 53 angekoppelt sind. Die Befestigung des Bearbeitungsgerätes sollte höhenverstellbar sein, um die Bearbeitungstiefe einstellen zu können. Wird das Schubaggregat mittels der Traktorhydraulik angehoben, wird zugleich auch das Bearbeitungsgerät 53 mit angehoben.

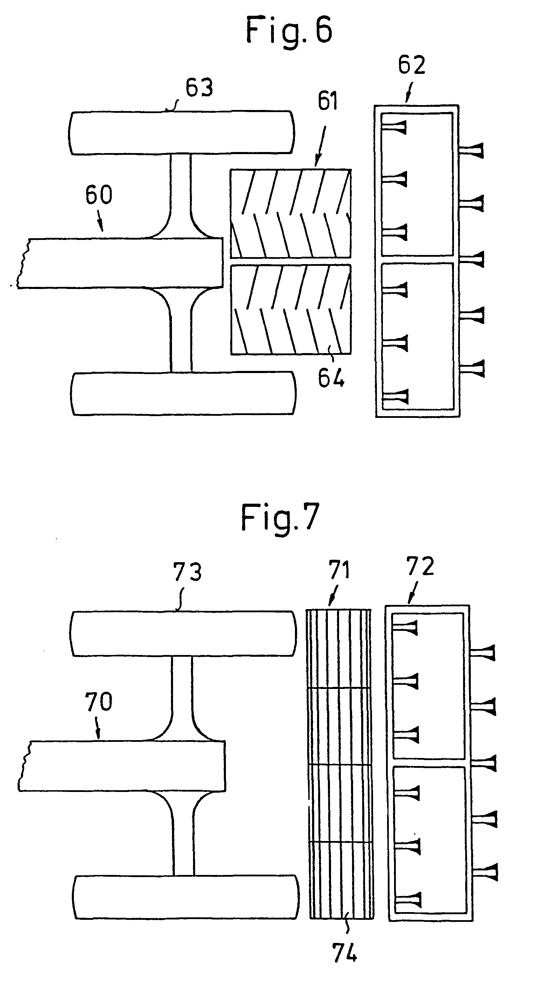

Die Fig. 6 und 7 zeigen die Kombination eines Traktors 60, 70 mit angekuppeltem Schubgerät 61 bzw. 71 und einem Bodenbearbeitungsgerät 62, 72. Das Schubgerät 61 ist so schmal, dass es zwischen die Antriebsräder 63 des Traktors plaziert werden kann.

Das Schubgerät 71 dagegen ist breiter, jedoch kürzer und muss daher hinter den Antriebsrädern 73 des Traktors angeordnet werden.

Das Schubaggregat 61 hat zwei parallel laufende Gummibandraupen 64, die mit schräg verlaufenden Stollen versehen sind. Das Schubaggregat 71 dagegen hat vier parallellaufende Stahlraupenketten 74 oder Gummiraupenbänder.

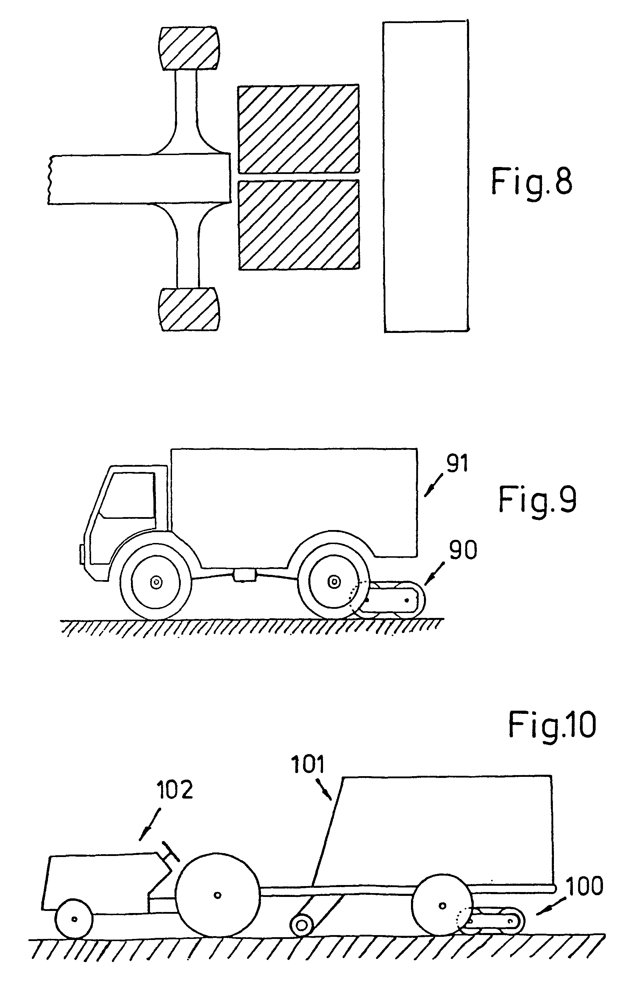

Fig. 8 zeigt die Grösse der Auflageflächen der Traktorräder 63 und des Schubgerätes 61 nach Fig. 6. Daraus ist ersichtlich, dass die Auflagefläche des Schubgerätes sehr viel grösser ist als diejenige der Traktorräder, so dass das Schubgerät grosse Schubkräfte aufbringen kann, ohne Schlupf befürchten zu müssen.

Fig. 9 zeigt eine andere Verwendungsmöglichkeit eines Schubaggregates 90, bei dem es die Zug- und Steigfähigkeit eines geländegängigen Fahrzeuges, z.B. eines Militärfahrzeuges 91, erhöht. Es ist so schmal, dass es zwischen den Hinterrädern angebracht werden kann. Hier kann mit Vorteil die Verbindung mittels eines Parallelogrammes nach Fig. 4 verwendet werden.

Fig. 10 schliesslich zeigt eine Verwendung des Schubaggregates 100 bei einem Ladewagen 101, der von einem Traktor 102 gezogen wird. Das Schubaggregat kann die Zugkraft des relativ schwachen Traktors erhöhen, wenn dieser den schwer beladenen Ladewagen bergauf ziehen muss.

Das lenkbare Fahrzeug kann anstelle der Räder, z.B. beim Betrieb im Schnee, mit Kufen ausgerüstet sein und in gleicher Weise betrieben werden wie mit den Rädern.

## Patentansprüche

1. Schubaggregat für ein lenkbares Räderfahrzeug, insbesondere Land- und Forstwirtschaftstraktoren, Erdbewegungsmaschinen, Baumaschinen und Geländefahrzeuge, welches als Raupenfahrzeug und zur Uebertragung seines Schubes auf das Räderfahrzeug ausgebildet ist. dadurch gekennzeichnet. dass das Schubaggregat auf der Rückseite des Räderfahrzeuges angeordnet und mit Mitteln (16, 21, 31, 41, 52) zum An- und Abkoppeln an das lenkbare Räderfahrzeug versehen ist. welche lasttragend zur Verringerung des spezifischen Bodendruckes des Räderfahrzeuges ausgebildet sind.

2. Schubaggregat nach Anspruch 1, dadurch gekennzeichnet, dass dessen Breite so bemessen ist, dass die Mittel ein Ankoppeln zwischen die Hinterräder des Fahrzeuges erlauben.

3. Schubaggregat nach Anspruch 1, dadurch gekennzeichnet, dass die Mittel zum Ankoppeln einen horizontal angeordneten Zapfen (16, 31) und eine entsprechende rohrförmige Hülse (33) umfassen, von denen das eine Element am Raupenfahrwerk, das andere Element am lenkbaren Fahrzeug angeordnet ist.

4. Schubaggregat nach Anspruch 1, dadurch gekennzeichnet, dass die Mittel zum Ankoppeln eine Dreipunktaufhängevorrichtung (21) oder Parallelogrammverbindung (41) mit Hebevorrichtung (24) umfassen.

5. Schubaggregat nach Anspruch 1, dadurch gekennzeichnet, dass es sowohl mit Mitteln (52) zum Ankoppeln an einen Traktor als auch mit Mitteln (51) zum Ankoppeln von landwirtschaftlichen Bodenbearbeitungsgeräten versehen ist.

6. Schubaggregat nach Anspruch 1, dadurch gekennzeichnet, dass dessen Raupenketten oder Raupenbänder sich mindestens annähernd über die volle Breite desselben erstrecken.

7. Schubaggregat nach Anspruch 6, dadurch gekennzeichnet, dass die Raupenketten oder Raupenbänder vom lenkbaren Fahrzeug aus auf mechanischem, hydraulischem oder elektrischem Wege synchron mit dessen Fahrtgeschwindigkeit angetrieben werden.

8. Schubaggregat nach Anspruch 6, dadurch gekennzeichnet, dass die Raupenketten oder Raupenbänder von einem an oder im Raupenfahrzeug untergebrachten Motor angetrieben werden.

9. Schubaggregat nach Anspruch 7, dadurch gekennzeichnet, dass das lenkbare Fahrzeug mit einem gesonderten, nur dem Antrieb des Schubaggregates dienenden Motor ausgerüstet ist.

## Revendications

1. Elément pousseur pour un véhicule à roues qui est conduit, comme en particulier les tracteurs agricoles et forestiers, les décapeurs, le matériel de travaux publics et les véhicules tout-terrain, élément qui est conçu comme véhicule à chenille et pour transmettre sa poussée au véhicule à roues, caractérisé en ce que l'élément pousseur est placé à l'arrière du véhicule à roues et est muni des moyens (16, 21, 31, 41, 52) permettant son accouplement et son désaccouplement avec le véhicule à roues, ces moyens étant conçus de manière à supporter la charge pour réduire la pression spécifique au sol du véhicule à roues.

2. Elément pousseur conformément à la revendication 1, caractérisé en ce que sa largeur est dimensionnée de manière que les moyens permettent un accouplement entre les roues arrière du véhicule.

3. Elément pousseur conformément à la revendication 1, caractérisé en ce que les moyens d'accouplement comprennent un axe horizontal (16, 31) et un fourreau (33) tubulaire correspondant, un élément étant placé sur l'engin à chenille et l'autre élément sur le véhicule tracteur.

4. Elément pousseur conformément à la revendication 1, caractérisé en ce que les moyens d'accouplement comprennent un dispositif de suspension à trois points (21) ou un raccordement par parallélogramme (41) avec dispositif de levage (24).

5. Elément pousseur conformément à la revendication 1, caractérisé en ce qu'il est équipé aussi bien de moyens (52) d'accouplement à un tracteur que de moyens (51) d'accouplement à des engins agricoles pour le travail du sol.

6. Elément pousseur conformément à la revendication 1, caractérisé en ce que ses chenilles ou ses bandages recouvrent au moins approximativement la totalité de sa largeur.

7. Elément pousseur conformément à la revendication 6, caractérisé en ce que les chenilles ou les bandages sont commandés depuis le véhicule tracteur, de manière mécanique, hydraulique ou électrique synchrone avec la vitesse de déplacement du véhicule.

8. Elément pousseur conformément à la revendication 6, caractérisé en ce que les chenilles ou les bandages sont commandés par un moteur additionnel ou incorporé à l'engin à chenille.

9. Elément pousseur conformément à la revendication 7, caractérisé en ce que le véhicule tracteur est équipé d'un moteur indépendant ne servant qu'à l'entraînement de l'élément pousseur.

## Claims

1. A pushing device for a steerable vehicle mounted on wheels, in particular agriculture and forestry tractors, ground levelling machines, construction machines and cross-country vehicles, said device being constructed as a track-laying vehicle and for transferring a push onto the vehicle mounted on wheels, characterised in that the pushing device is arranged on the rear side of the vehicle mounted on wheels and is provided with means (16, 21, 31, 41, 52) for coupling and uncoupling onto the steerable vehicle mounted on wheels, which are designed to be load-carrying for reducing specific ground pressure of the vehicle mounted on wheels.

2. A pushing device according to claim 1, characterised in that its width is proportioned so that the means enable coupling between the rear wheels of the vehicle.

3. A pushing device according to claim 1, characterised in that the means for coupling comprise a horizontally arranged plug (16, 31) and a corresponding tubular sleeve (33), the one element of which is arranged on the tracked travelling gear, and the other element of which is arranged on the steerable vehicle.

4. A pushing device according to claim 1, characterised in that the means for coupling comprise a three-point suspension device (21) or parallelogram connection (41) with lifting device (24).

5. A pushing device according to claim 1, characterised in that it is provided with means (52) for coupling to a tractor as well as means (51) for coupling agricultural cultivation equipment.

6. A pushing device according to claim 1, characterised in that its crawler tracks or crawler bands extend at least approximately over the full width of the same.

7. A pushing device according to claim 6, characterised in that the crawler tracks or crawler bands are driven by the steerable vehicle mechanically, hydraulically or electrically, synchronously with its travelling speed.

8. A pushing device according to claim 6, characterised in that the crawler tracks or crawler bands are driven by a motor accommodated on or in the track-laying vehicle.

9. A pushing device according to claim 7, characterised in that the steerable vehicle is equipped with a separate motor only serving to drive the pushing device.

Fig.1

Fig.2

EP 0 167 077 B1

Fig. 3

Fig. 4

Fig. 5

2

# Fig. 6

# Fig.7

Fig.8

Fig.9

Fig.10